# EUROPEAN PATENT APPLICATION

(11) **EP 1 961 476 A1**
(43) Date of publication of application: **27.08.2008**
(21) Application number: 08000145.6
(22) Date of filing: 07.01.2008
(51) Int. Cl.: B01D 46/24, B01D 46/00

(54) **Counterflow cleaning system to be used with cartridge filter or other filtering system characterized by the exclusion of the cartridge from the air stream**

(30) Priority: 10.01.2007 IT PO20070001
(71) Applicant: HPM Divisione Nautica S.r.l., 55049 Viareggio (LU) (IT)
(72) Inventor: Bertacca, Alessandro, 55049 Viareggio (LU) (IT); Ghilardi, Gianluigi, c/o HPM Div. Nautica SRL, 55049 Viareggio (LU) (IT); Carrai, Carlo Alberto, 55043 Lido di Camaiore-Camaiore (LU) (IT)

(57) **Abstract**

According to the invention we are going to construct a system for cleaning of the filtering cartridges, or other filtering elements, present inside of an aspiration system for aspiration of airflow charged with dispersed particles, in order to avoid or retard the replacement or the cleaning of the cartridges due to their saturation. The system is characterized by being the number of the filtration elements, cartridges or other, more or equal to 2.

One part of the filtration elements, generally one, is being cleaned by means of an airflow counter-current while the others continue to participate on filtering the airflow aspirated in its normal direction. This system is different compared to others, representative of the actual state of art, essentially due to the special system that avoids the cartridge being cleaned to be convolved in the airflow in aspiration.

## Description

Numerous technological proceedings lead to formation of particles that get dispersed in the air and that may be conveniently aspirated using suitable means of capitation, general and localized, and conveyed towards an emission in atmosphere or, either more commonly, separated from the air by means of filtering units. Among these technological proceedings we may list the cutting and grinding of metals, the proceeding of wood, sandblasting, sandpapering, and so on..

Notwithstanding every of the aspects of these proceedings is commonly known by now, the solutions regarding the separation of the particles from the air come down to the same problem: the necessity to clean the filtering unit. Without cleaning the filtering unit, the element that provokes the separation of the particles from the airflow that conveys them, saturates quickly and loses its efficacy, compromising consequently the efficacy of the whole system. The subsequently described concept is referred to filtering units of cylindrical form called "cartridges", also if the invention is applicable on any type of filtering unit able to maintain its form sufficiently, not subject to deformation by counter-current airflow crossing it, due to proper rigidity or due to rigidity of the containment structure of the filtering unit.

Subsequently we describe the principle of the functioning of the aspiration system and the separation of the dust, also called "de-duster".

The airflow is generated by a ventilator aspirator, generally of centrifugal type, placed below the separation system, which creates the depression necessary to give the airflow in the ducts the right speed for conveying the particles, considered also the leakage of the ducts and the filters.

In general, the air charged with dust, before transiting the filters, enters in a pre-separation zone, where, decreasing the airflow speed, it loses, due to gravity, the heavier dust particles. This pre-separation zone is directly connected to the filtration zone, or better the zone where the cartridges are installed, and sometimes there is one common zone where it comes to pre-separation and filtration.

The cartridges, that in our case represent the filtration element, are normally installed with their axis parallel one to the other and are being crossed by the airflow from outside towards inside. This way the air loses its charge of dust that deposits on the surface of the cartridge and reaches the inside area currently called "the clean zone" that results to be in connection to the above mentioned ventilator aspirator.

As already said, the dust particles, or other particles, present suspended in the air accumulate on the surface of the cartridges. This phenomena in the first phase is useful to reach optimal efficacy of the cartridge, but once reached a certain quantity of deposited material, the cartridge gets saturated, or better the load loss due to the flow through of the residual free surface of the filtering section is so high that the load of the system results no more adequate for the specific application. For this reason the filtration system has to be equipped with a cartridge cleaning system, or however another operation has to be considered in order to maintain its efficiency.

Generally among the cleaning systems we may distinguish between those that operate when the whole system is in function and those that operate when the aspirating system is in standby or switched off. So as to describe the function of the invented cleaning system we consider only the actual state of the art of the cleaning systems that work when the aspiration system is operating, also if the application of the invention may be extended also to the other cases.

Actually, there exists inside the aspiration systems present on the market, a system of cleaning called "reverse jet" counter-current. With this system, in one cartridge, while participating on the aspiration and separation function, compressed air is being blown from one or more tuyeres positioned either inside or on one extremity of the cartridge. In general, every cartridge has its proper cleaning tuyere system that is being activated cyclically and sequentially. When one tuyere is being activated, the compressed airflow provokes a slight deformation of the membrane constituting the filter and the detachment of the dust deposited on the surface of the cartridge, with consequent depositing of the detached dust particles in a hopper positioned below.

This method, commonly used, presents two limitations. The first one, also if of less importance, is that the system is not suitable for cartridges placed high above the base, for the difficulty to be reached by a constant compressed airflow on all the length of the cartridge.

But the principal limitation arises out of the fact that the cleaning cycle takes place while the aspiration system is operating, and thus, for how strong may be the counter-current airflow injected, it has to win the resistance of the airflow in aspiration entering inside the cartridge. However, the airflow finds its natural way to the "clean zone", or better towards the easier direction favored by the opening of the conduct and by the presence of the airflow in aspiration. A direction that results being opposite to the one necessary for the cleaning process. We must add that a part of the dust detached from the cartridge due to the shock wave and the passage of the air counter-current, thus inside the aspiration zone, is being carried back to deposit on the cartridge by the ventilator aspirator. This way the efficiency of the cleaning process is being partially compromised.

To limit this inconvenience generally a "post cleaning process" takes place. That is, the sequence of the air jet is being maintained for a while after having turned off the ventilator aspirator to enable better cleaning of the system, taking advantage of a moment when the airflow in aspiration is null. This method, any way, not only does not resolve completely the problems mentioned, it creates another one: a constant and undetermined long term functioning of the aspiration system is not possible, it has to be switched off periodically to enable the post cleaning process.

This problems are to be resolved or significantly reduced by use of the aspiration system invented.

Substantially, according to the invention, we are going to construct a filtering system the filtering group of which is constituted by cartridges, n≥2 from which one part m is going to participate on the aspiration process and the remaining one q is going to be sequentially cleaned. Clearly, m + q = n, m and n ≥1. The system is going to be dimensioned in a way to have suitable filtering capacity with m cartridges. One possible, not limiting solution may be q=1, or better one cartridge more than necessary to ensure correct filtration.

The essential and distinguishing characteristic of the invention compared to the actual state of art is that inside the cartridge (or cartridges) in the phase of cleaning the air flow in aspiration, the airflow driven by the aspirator ventilator, is null, avoiding the dispersion of the airflow cleaning to other directions different from the one desired. In other words, one cartridge is going to be cleaned in a moment when not participating on the aspiration process.

To obtain this effect, according to the invention, we realize a selective closure system that in general is going to be rotating or sliding conform with one or more directions, able to close the airflow conduct of the cartridge and the clean zone of the cartridge/s that has/ve to be cleaned. This way the same cartridge ceases to have the airflow through the filtering surface. The selective closure system is equipped with a tuyere of adduction of air that, commanded by a suitable sequencer synchronized with the closure system is going to inject air inside the small area that is going to be formed inside the cartridge.

The disposition of the cartridges has to be suitable in order to enable to the closure system to proceed, that is to enable the selective closure of the opening/s of the cartridge/ to be cleaned. This disposition may be linear in one row, in parallel, or circular or of any type without this outranging the invention. The technique used to move the closure system, also according to the different closure directions may be mechanical, electric, electronic, electromagnetic, pneumatic or using a mix of technologies, without this choice being considered a limitation to the invention.

On illustration 1 there is an example of the structure, in exploded view, of a simple aspirator, equipped with two cartridges, the closure system of which is being illustrated on picture 2 with n=2 and m=q=1.

On picture 1 there is the ventilator aspirator indicated as nr.(1), with nr.(2) there is the inflow opening for the airflow charged with particles, as nr.(3) the filtration zone, as nr.(4) the hopper for the collection of the dust, as nr.(5) the filtering cartridges, as nr.(6) the part of the cartridges from where the air filtered exits, as nr.(7) the clean zone, as nr.(8) the surface on which the device illustrated on picture 2 is going to be placed.

On illustration nr. 2, as letter A, schematized, there is the same part illustrated on picture 1 with the same nr. (8), the nr.(9) the guides on which the selective closure device slides, as nr. (10) the part that completes the closure when superimposed, as nr. (11) the position of the device for injection of the air. The circular elements indicate the position of the cartridges. In the same picture, under letter B there is another position that the system may assume.

The example illustrated does not have to be considered a limitation to the invention, being possible any combination of numbers n, m and q, in above described relations and with selective closure methods that manage the structure of the filtration elements in any dislocation possible, eventually with guides, or other methods, also with multiple directions, orthogonal, radial or different.

The invention contemplates the use of devices for air inflow that may be equipped with one or more tuyeres. The tuyere/s may be positioned fixed to the closure system or mobile, in a way to remain placed inside of the cartridge. Besides the air flow jet may be in one phase or in more sequential phases, in a way to stress the cartridge by sequential shock waves, also if priming eventual phenomenon of resonance of the filtering material. This all without outranging the invention.

The system as above described finds its peculiar application in aspiration systems that operate continuously, but it may be used also when the aspiration ceases, to enable ulterior cleaning of the filtering material. This all without outranging the invention.

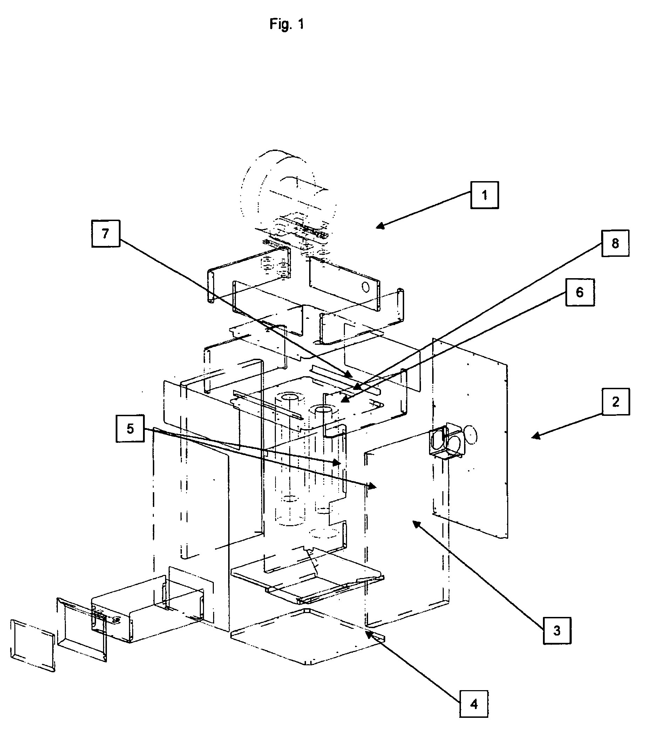

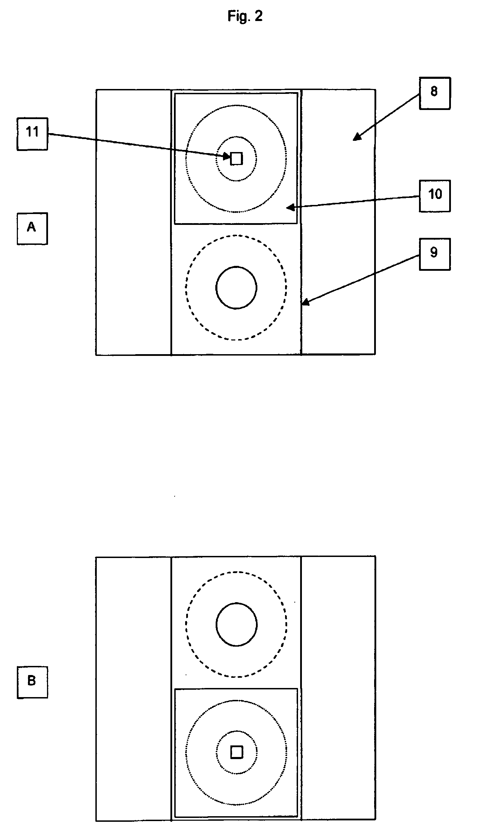

## Claims

1. Selective closure system between the filtering elements and the clean zone of an aspiration system **characterized by** the possibility to change the closure position of the filtering element and to inject air inside the zone closed formed by the mentioned filtration element, the structure and the closure.

2. Selective closure system between filtration elements of cylindrical form and the clean zone of an aspiration system **characterized by** the possibility to change the closure position of the filtering element and to inject air inside the zone closed formed by the mentioned filtering element, the structure and the closure.

3. Closure system according to claims 1 and/or 2 for the counter-current cleaning of the filtering elements.

4. Closure system according to claims 1 and/or 2 for the counter-current cleaning of the filtering elements inside of dust aspiration systems.
